# EUROPÄISCHE PATENTANMELDUNG

(11) **EP 1 151 906 A2**
(43) Veröffentlichungstag der Anmeldung: **07.11.2001**
(21) Anmeldenummer: 01109722.7
(22) Anmeldetag: 20.04.2001
(51) Int. Cl.: B61D 43/00, H02K 7/18

(54) **Eisenbahnwaggon**

(30) Priorität: 26.04.2000 DE 10020397
(71) Anmelder: Tiefenbach GmbH, 45549 Sprockhövel (DE)
(72) Erfinder: Burghoff, Jürgen, 45529 Hattingen (DE)
(74) Vertreter: Pfingsten, Dieter, Dipl.-Ing.

(57) **Zusammenfassung**

Ein Eisenbahnwaggon 1 besitzt einen elektrischen Verbraucher 12,
welcher durch eine aufladbare Batterie mit Strom versorgt wird. Die Batterie wird mittels Ladegerät und einem Spannungsgenerator aufgeladen. Der dazu dienende Spαnnungsgenerator ist eine Spule, welche an dem Waggon im magnetischen Einflußbereich einer Störeinrichtung, jedoch damit berührungslos angeordnet ist. Die Störeinrichtung ist an einem Rad bzw. einer Achse rotations-asymetrischen angebracht und induziert in der Spule einen pulsierenden Gleichstrom. Die Wicklung der Spule 5 ist über einen Gleichrichter 9 und ein Ladegerät 10 mit der Batterie 11 verbunden.

Die Spule besitzt einen Eisenkern, der permanent magnetisch ist.

## Beschreibung

Die Erfindung betrifft einen Eisenbahnwaggon nach dem Oberbegriff des Anspruch 1. Derartige Eisenbahnwaggons weisen Steuereinrichtungen, z. B. zur Betätigung der Verriegelung, Signaleinrichtungen, insbesondere Leuchten oder sonstigen elektrischen Einrichtungen auf.
Ein wichtiges Anwendungsgebiet derartiger elektrischer Einrichtungen sind auch Ortungsgeräte, durch welche die augenblickliche geografische Position des Waggons ermittelt und insbesondere über Funk zu einer Leitstelle übertragen werden kann.
Ein anderes Einsatzgebiet sind Sensoren, welche an dem Waggon angebracht sind und auf ortsfeste Sender, z.B. magnetische Spulen oder dergl. reagieren. Durch solche Sensoren können Funktionen des Waggons ausgelöst werden wie Z.B. die Bremsen des Waggons ausgelöst oder Ladeluken geöffnet werden.
Derartige elektrische Einrichtungen benötigen eine stets vorhandene Gleichspannung aus einer Batterie, weiche in dem Waggon mitgeführt wird.
Zum Aufladen sind bereits Solarzellen vorgeschlagen worden. Diese haben den Nachteil, dass sie zum einen auf Sonnenstrahlung angewiesen sind, welche je nach Fahrtrichtung und
Wetter nicht zur Verfügung steht. Zum anderen lässt die Leistung dieser Solarzellen durch Verschmutzung nach. Auch ist der sehr rauhe Eisenbahnbetrieb wenig geeignet, um diese Solarzellen vor Beschädigung zu schützen.
Ebenfalls bekannt ist es, zum Aufladen der Batterien in jedem Waggon eine übliche Dynamomaschine als elektrischen Spannungsgenerator fest zu installieren, welche von einem der Räder oder einer Achse angetrieben wird, Diese Ausführung ist aufwendig und gegenüber Beschädigungen im Eisenbahnbetrieb empfindlich.

Die Aufgabe der Erfindung ist es, einen Eisenbahnwaggon mit einem robusten und zugleich zuverlässigen und technisch einfachen Spannungsgenerator auszustatten, der zum Aufladen der Batterie geeignet und ausreichend ist.
Die Lösung ergibt sich aus Anspruch 1.

Die Lösung zeichnet sich dadurch aus, dass der Stator dieses Spannungsgenerators eine einzige einfache Spule mit Achse ist, während der Rotor zumindest eine elektromagnetische Störeinrichtung ist, welche mit einem der Räder oder der Achse des Eisenbahnwaggons umläuft. Die Spule kann vorzugsweise eine geradlinige Achse und vorzugsweise einen Eisenkern besitzen.

In jedem Falle befindet sich die Umlaufbahn der Störeinrichtung vor zumindest einer der Stirnflächen der Spule bzw. des Kerns, so dass das Feld der Spule und des Kerns, welches sich vor dieser Stirnfläche aufbaut, durch die sich mit geringem Abstand berührungslos vorbei bewegende Störeinrichtung (vorbei bewegenden Störeinrichtungen) laufend verändert und dadurch eine Spannung in der Spule induziert wird.
Es ist jedoch auch möglich, die Spule mit kreisförmig geschlossener Achse, insbesondere auf einen kreisringförmigen Kern zu wickeln, wobei dieser torusförmige Kern in einer Ebene, vorzugsweise einer Radialebene geschnitten ist. In diesem Falle bewegt sich die Störeinrichtung in Form einer Scheibe auf der genannten Schnittebene durch den Torus,
Die induzierte Spannung ist eine stark schwankende oder auch wechselnde Spannung, geglättet und gleichgerichtet und sodann zum Aufladen der Batterie benutzt wird.
Als Störeinrichtung wird in dieser Anmeldung ein Gegenstand bezeichnet, welcher mit dem Rad oder der Achse des Waggons umläuft und die magnetische Rotationssymmetrie des Rades bzw. der Achse unterbricht.
Die Erregung der Spule und Induktion der Spannung beruht auf der Störung eines Magnetfeldes bzw. auf der Bewegung der Spule durch ein Magnetfeld.
Das Magnetfeld kann durch Permanentmagneten oder Elektromagneten erzeugt werden. So ist es möglich, die Spule ohne Kern oder mit nicht magnetischem Kern zu versehen und mit der aufzuladenden oder einer anderen Batterie zu verbinden. Zum Laden der Batterie werden sodann die durch die Störungen des Magnetfeldes induzierten Spannungsschwankungen und Spannungsspitzen genutzt.
Die Erregung der Spule und Induktion der Spannung wird sichergestellt bzw. verstärkt durch die Ausführungen nach den Ansprüchen 2 oder 3, wobei die Ausführung nach Anspruch 2 sich durch besondere Einfachheit und Robustheit auszeichnet. Bei der Ausführung nach Anspruch 3 kann, nicht muß die Spule mit einem nicht magnetischen Kern, z.B. Weicheisenkem ausgerüstet sein.
Die Ausführungen nach Anspruch 4 oder Anspruch 5 sind ohne besonderen Aufwand auch zur Nachrüstung von Waggons geeignet.
Die Erkenntnis stellt einen Teil der Erfindung dar, daß der Energiebedarf spezleller Verbraucher eines Waggons sehr gering ist im Vergleich zu der bei langer Fahrt anfallenden Energie und dem geringen erforderlichen Ladestrom. Ein derartiger Verbraucher mit niedrigem Energieverbrauch, aber hohem Nutzen, der sich besonders zum Einsatz im Zusammenhang mit der Energieerzeugung nach dieser Erfindung auszeichnet, ist Gegenstand der Ausführungen nach den Ansprüchen 6 bis 8.

Im Folgenden wird die Erfindung anhand eines Ausführungsbeispiels beschrieben.
Es zeigen:

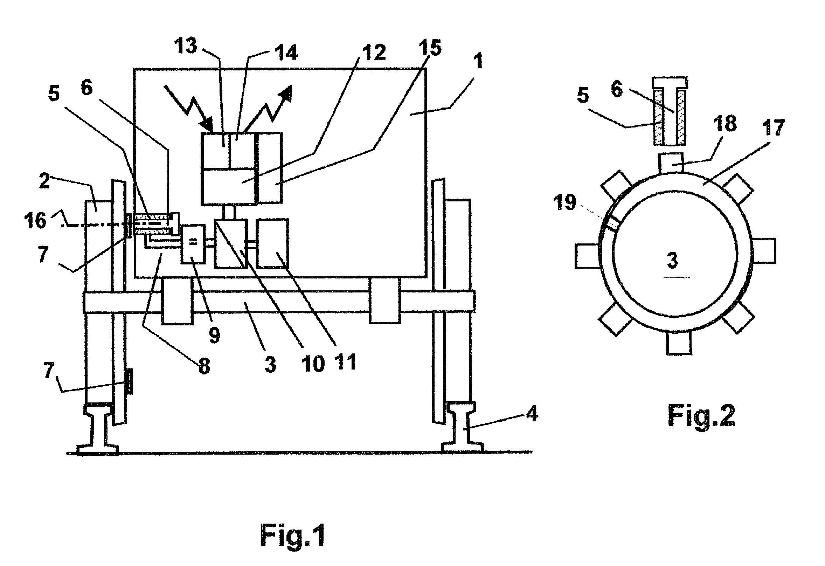

Figur 1: den Querschnitt durch einen Eisenbahnwaggon in stark schematisierter Darstellung. Figur 2:
- 1.: Eisenbahnwaggon 1
- 2.: Rad 2
- 3.: Achse 3
- 4.: Schiene 4
- 5.: Spule 5
- 6.: Kern 6
- 7.: Störeinrichtung, Schraubenkopf 7
- 8.: Leitung 8
- 9.: Gleichrichter 9
- 10.: Ladegerät 10
- 11.: Batterie 11
- 12.: elektrischer Verbraucher, Ortungsgerät, GPS-Gerät 12
- 13.: Empfänger, Satellitenempfänger 13
- 14.: Funkgerät 14
- 15.: Steuergerät 15
16.

Die Spule 5 mit dem Kern 6 ist an dem Waggon 1 befestigt. Dargestellt ist, dass die Spule vor der dem Waggon zugewandten Stirnseite des Rades 2 befestigt ist, In einen Teilkreis 16 einer Stirnseite des Rades sind mehrere Schrauben eingebracht. Die Köpfe 7 dieser Schrauben stellen Störeinrichtungen dar, weiche sich vor der dem Rad zugewandten Stirnseite des Kerns 6 bzw. der Spule 5 vorbeibewegen und das magnetische Feld der Spule 5 stören. Durch diese Störung wird in der Spule 5 eine Spannung induziert, die über Leitungen 8 dem Gleichleiter 9 zugeleitet wird. Der Gleichrichter 9 ist mit einem Ladegerät 10 verbunden. Durch dieses Ladegerät wird die Batterie 11 aufgeladen. Andererseits wird durch das Ladegerät die Batterie 11 mit dem elektrischen Verbraucher 12 verbunden, wenn die Batterie ausreichend aufgeladen ist oder wenn sich der Eisenbahnwaggon in Ruheposition befindet,

Figur 2 zeigt eine Schelle mit scheibenförmigen Vorsprüngen 18, die radial aus der Schelle hervorstehen. Die Schelle ist in einer Ebene 19 zweigeteilt und durch (nicht dargestellte) Schrauben um die Achse 3 gespannt. Im elektromagnetischen Einflussbereich der Vorsprünge befindet sich die Spule 5 mit Kern 6. Durch die Vorbeibewegung der Vorsprünge wird in der Spule eine stark pulsierende Gleichspannung induziert, genauso wie dies durch die Schraubenköpfe 7 geschieht. Die Vorsprünge 18 wirken hier als Störeinrichtung.
Die Spule 5 ist mit einem Eisenkern 6 ausgestattet, um ihre Induktivität zu erhöhen. Der Eisenkren ist vorzugsweise ein Permanentmagnet. Dadurch wird sichergestellt, daß die Induzierung einer Spannung nicht nur von einem Restmagnetismus abhängt. Alternativ oder zusätzlich können auch die Störeinrichtungen -Schraubenköpfe, Vorsprünge oder dergl. permanentmagnetisch sein.
Die Erfindung hat den Vorteil, daß die spannungserzeugende Spule einfach, robust und verschleißfrei ist. Andererseits genügt sie trotz der stark schwankenden induzierten Spannung völlig, um die Batterie wieder aufzuladen, da der Batterie nur relativ geringe Ladungsmengen entnommen werden und die Entladung stets nur kurzzeitig ist. insbesondere tritt während der Fahrt keine größere Entnahme auf, so daß die Batterie bei Stillstand des Waggons aufgeladen ist.

## Patentansprüche

1. Eisenbahnwaggon
mit einem elektrischen Verbraucher,
welcher durch eine aufladbare Batterie mit Strom versorgt wird,
wobei die Batterie mittels Ladegerät und einem Spannungsgenerator aufladbar ist,
und wobei der Spannungsgenerator durch ein Rad bzw. eine Achse des Eisenbahnwaggons angetrieben wird.
Kennzeichen:
Der Spannungsgenerator wird durch eine elektromagnetische Spule und eine Störeinrichtung gebildet;
die Spule ist an dem Waggon im magnetischen Einflußbereich der Störeinrichtung, jedoch damit berührungslos angeordnet;
die Störeinrichtung ist ein an einem Rad bzw. einer Achse angebrachter Eisenkörper, welcher die magnetische Rotationssymetrie des Rades bzw. der Achse stört;
die Wicklung der Spule ist über einen Gleichrichter und ein Ladegerät mit der Batterie verbunden.

2. Eisenbahnwaggon nach Anspruch 1
Kennzeichen
die Spule besitzt einen Eisenkern;
der Eisenkern ist permanent magnetisch.

3. Eisenbahnwaggon nach Anspruch 1 oder 2
Kennzeichen
Die Störeinrichtung ist permanent magnetisch.

4. Eisenbahnwaggon nach Anspruch 1
Kennzeichen
als Störeinrichtung ist zumindest ein Bolzen oder dergleichen, insbesondere eine Schraube in das Rad oder die Achse,
vorzugsweise in einem Teilkreis auf der dem Eisenbahnwaggon zugewandten Stirnseite des Rades eingebracht, dessen Kopf bzw. deren Schraubenkopf sich bei Umdrehung des Rades bzw. der Achse durch den magnetischen Einflussberelch der Spule bewegt.

5. Eisenbahnwaggon nach einem der Ansprüche 1 bis 3
Kennzeichen
Die Störeinrichtung ist eine auf die Achse gespannte Schelle, welche auf ihrem Umfang zumindest einen Vorsprung aufweist, welcher bei Drehung der Achse sich durch den magnetischen Einflussbereich der Spule bewegt.

6. Eisenbahnwaggon nach einem der vorangegangenen Ansprüche
Kennzeichen
Der elektrische Verbraucher ist ein Satellitennavigationsgerät (GPS) und ein Funksender zur Übermittlung der von dem Satellitennavigationsgerät ermittelten aktuellen Position und vorzusweise auch eines dem Waggon eigenen Kennzeichens und/ oder sonstiger Daten des Waggons, insbesondere Ladung und Zielort.

7. Eisenbahnwaggon nach einem der vorangegangenen Ansprüche
Kennzeichen
Der elektrische Verbraucher ist ein Funksender zur Übermittlung von Signalen, insbesondere Anwesenheitssignalen und/ oder der aktuellen Position des Waggons und/ oder eines dem Waggon eigenen Kennzeichens und/ oder sonstiger Daten des Waggons, insbesondere Ladung und Zielort.

8. Eisenbahnwaggon nach einem der vorangegangenen Ansprüche
Kennzeichen
Der elektrische Verbraucher ist ein Sensor, welcher im Zusammenwirken mit einem ortsfesten Sensor vorbestimmte Funktionen des Waggons auslöst.
